# FASCICULE DE BREVET EUROPEEN

(11) **EP 4 590 555 B1**
(45) Date de publication et mention de la délivrance du brevet: **11.11.2026**
(21) Numéro de dépôt: 23767906.3
(22) Date de dépôt: 07.09.2023
(51) Int. Cl.: B60R 25/20, B60R 25/24

(54) **BOÎTIER DE COMMANDE, DISPOSITIF ET ENSEMBLE DE VERROUILLAGE ET DÉVERROUILLAGE D'UN VÉHICULE ÉQUIPÉ D'UN SYSTÈME DE GESTION CENTRALISÉE DES OUVRANTS**
STEUERKASTEN, VORRICHTUNG UND ANORDNUNG ZUM VERRIEGELN UND ENTRIEGELN EINES FAHRZEUGS MIT EINEM SYSTEM ZUR ZENTRALEN VERWALTUNG VON ÖFFNUNGSPANEELEN
CONTROL BOX, DEVICE AND ASSEMBLY FOR LOCKING AND UNLOCKING A VEHICLE EQUIPPED WITH A SYSTEM FOR CENTRALISED MANAGEMENT OF OPENING PANELS

(30) Priorité: 20.09.2022 FR 2209517
(43) Date de publication de la demande: 30.07.2025
(73) Titulaire: Renault s.a.s, 92100 Boulogne Billancourt (FR)
(72) Inventeur: BEZEAULT, Loic, 78280 GUYANCOURT (FR); LAURENT, Sébastien, 78280 GUYANCOURT (FR)
(86) Numéro de dépôt international: PCT/EP2023/074675
(87) Numéro de publication internationale: WO 2024/061649

(56) Documents cités:
- CN-U- 205 277 054
- DE-A1- 102012 015 925
- DE-A1- 102016 119 951
- US-B2- 11 008 776

## Description

L'invention concerne un boîtier de commande pour dispositif de verrouillage et déverrouillage d'un véhicule équipé d'un système de gestion centralisée d'ouvrants. L'invention concerne également un dispositif et un ensemble de verrouillage et déverrouillage, ainsi qu'un véhicule équipé dudit dispositif et/ou dudit ensemble. L'invention concerne enfin un procédé de verrouillage d'un véhicule comprenant un ensemble de verrouillage et déverrouillage.

Document DE 102012015925 divulgue un boîtier de commande ouvrable apte à coopérer avec un dispositif de verrouillage et de déverrouillage d'un véhicule. Un renfoncement est configuré pour loger une clé électronique du véhicule.

Dans le milieu automobile, il est connu d'utiliser des clés électroniques, ou badges, permettant une gestion à distance des ouvrants, notamment leur verrouillage et déverrouillage. Néanmoins, de telles clés électroniques comprennent des éléments électriques et électroniques, comme un moyen d'alimentation en énergie électrique, les rendant inadaptées à une utilisation dans des conditions extérieures difficiles, par exemple impliquant des impacts, des intempéries, une certaine humidité ou encore la présence de poussières et particules. Par exemple, lorsqu'un usager utilise son véhicule pour se rendre sur un lieu de pratique d'un sport ou d'une activité extérieure, il est souvent contraint de garder la clé de son véhicule sur lui pendant ses activités. Il est alors susceptible de perdre la clé de son véhicule ou de la confronter à des agressions extérieures auxquelles il n'est pas adapté du fait des conditions extérieures précitées. Afin de résoudre un tel problème, il est connu de mettre en œuvre le verrouillage ou le déverrouillage des ouvrants par l'intermédiaire d'un accessoire équipé d'un moyen d'identification interagissant directement avec le système de gestion centralisée du véhicule. L'utilisateur peut alors transporter un tel accessoire en lieu de la clé électronique de sorte à préserver l'état de celle-ci tout en sécurisant le véhicule. Un inconvénient d'un tel principe réside dans le fait qu'il requiert d'intervenir sur les systèmes équipant le véhicule, notamment le système de gestion centralisée des ouvrants. Une telle intervention est complexe et coûteuse, nécessitant notamment la modification logicielle et matérielle des systèmes de gestion et de sécurité du véhicule. Les procédés mis en œuvre pour l'utilisation de tels accessoires sont alors complexes. En outre, les accessoires utilisés nécessitent des équipements particuliers, tel qu'une source d'alimentation, susceptible de les rendre peu adaptés à une utilisation dans le cadre de la pratique d'un sport ou d'une activité en extérieur.

La présente invention s'inscrit dans ce contexte et vise à proposer un boîtier de commande selon la revendication 1 ainsi qu'un procédé de verrouillage et déverrouillage selon la revendication 9 remédiant aux inconvénients ci-dessus et améliorant les dispositifs et procédés de verrouillage connus de l'art antérieur. En particulier, l'invention propose une solution peu coûteuse, simple et fiable, ne nécessitant pas de modifier l'électronique embarquée du véhicule.

L'invention se rapporte à un boîtier de commande pour dispositif de verrouillage et déverrouillage d'un véhicule équipé d'un système de gestion centralisée d'ouvrants. Le boîtier de commande comprend un boîtier ouvrable comportant un renfoncement configuré pour loger une clé électronique du véhicule. Le boîtier de commande comprend un élément de communication, un moyen d'actionnement mécanique et un circuit électrique et électronique de commande dudit moyen d'actionnement de sorte que le moyen d'actionnement est apte à déclencher au moins une fonction de la clé électronique, notamment une fonction de verrouillage centralisé, de déverrouillage centralisé et/ou d'ouverture d'un coffre du véhicule, lorsque qu'un moyen d'identification portable, équipé d'une puce apte à communiquer avec l'élément de communication, est détecté.

Notamment, le boîtier ouvrable peut comprendre un premier demi boîtier et un deuxième demi boîtier mobiles l'un relativement à l'autre :
- le premier demi boîtier comprenant au moins une partie de l'élément de communication, le moyen d'actionnement mécanique et le circuit électrique et électronique de commande ; et
- le deuxième demi boîtier comprenant le renfoncement.

Par exemple, le moyen d'actionnement mécanique peut comprendre :
- au moins un actionneur linéaire et un basculeur comportant une pluralité de doigts d'indexages rotatifs ; et/ou
- une pluralité de doigts d'indexage actionnables indépendamment les uns des autres, chacun relié à un électroaimant.

Le boîtier de commande peut comprendre, en outre, un moyen d'alimentation en énergie électrique sélectionné parmi une batterie portable, au moins une pile et/ou un port connecteur de charge. Optionnellement, le boîtier de commande peut comprendre un mécanisme d'interruption de l'alimentation du boîtier de commande et/ou un indicateur de niveau d'énergie de l'au moins un moyen d'alimentation.

L'élément de communication peut comprendre une antenne, notamment une antenne RFID, et un lecteur, notamment un lecteur RFID, l'élément de communication étant tel que :
- l'antenne est logée dans le boîtier ouvrable ; ou
- l'antenne est fixée sur le boîtier ouvrable ; ou
- l'antenne s'étend à l'extérieur du boîtier ouvrable et est reliée au lecteur par l'intermédiaire d'un câble.

Le boîtier de commande peut, en outre, comprendre au moins un moyen d'attache du boîtier dans le véhicule sélectionné parmi un moyen d'attache amovible, tel qu'une sangle, une bande adhésive ou une ventouse, et/ou un moyen d'attache compris dans le boîtier ouvrable, tel qu'une patte.

L'invention concerne encore un dispositif de verrouillage et déverrouillage d'un véhicule automobile comprenant un système de gestion centralisée d'une pluralité d'ouvrants, le dispositif comprenant un boîtier de commande selon l'invention et au moins un moyen d'identification portable, notamment équipé dans un accessoire tel qu'un bracelet, une montre, une bague, un collier ou un porte-clés, comprenant une puce, notamment une puce RFID.

L'invention s'étend à un accessoire pour un dispositif de verrouillage et déverrouillage selon l'invention, tel qu'un bracelet, une montre, une bague, un collier ou un porte-clés, l'accessoire comprenant un moyen d'identification portable configuré pour communiquer avec un élément de communication d'un boîtier de commande, le moyen d'identification comprenant une puce, notamment une puce RFID.

L'invention concerne également un ensemble de verrouillage et déverrouillage d'un véhicule automobile comprenant un système de gestion centralisée d'une pluralité d'ouvrants, l'ensemble comprenant un dispositif de verrouillage et déverrouillage selon l'invention et une clé électronique, disposée dans le boîtier de commande.

L'invention concerne un véhicule automobile comprenant un dispositif de verrouillage et déverrouillage et/ou un ensemble de verrouillage et déverrouillage selon l'invention, le véhicule comprenant, en outre, un système de gestion centralisée et au moins un emplacement défini de positionnement du boîtier de commande, l'au moins un emplacement étant sélectionné parmi :
- un emplacement situé en regard d'un vitrage du véhicule automobile le long d'au moins une direction, notamment en regard d'un hayon, d'un pare-brise, d'une vitre latérale et/ou d'une custode avant ou arrière ; et/ou
- un emplacement situé sous une tablette arrière du véhicule automobile, dans une zone d'un habillage du hayon du véhicule automobile ; et/ou

- un emplacement situé dans une planche de bord avant du véhicule automobile ; et/ou
- un emplacement situé dans une trappe de carburant ou de recharge du véhicule comprenant une surface en plastique; et/ou
- un emplacement situé dans un passage de roue du véhicule ; et/ou
- un emplacement situé au niveau du logo avant ou arrière du véhicule ; et/ou
- un emplacement situé dans la partie haute d'un pied disposé entre des ouvrants ou d'un pied bordant un pare-brise ; et/ou
- un emplacement situé dans le capot, notamment au niveau d'une zone de dépose intérieure.

L'invention concerne enfin un procédé de verrouillage d'un véhicule comprenant un ensemble de verrouillage et déverrouillage selon l'invention comprenant :
- le portage du moyen d'identification par un utilisateur ;
- la mise en place de la clé électronique dans le boitier de commande et la fermeture du boîtier ;
- le positionnement du boîtier de commande au niveau d'un emplacement prédéfini du véhicule ;
- la fermeture des ouvrants du véhicule de sorte que l'ensemble des ouvrant est en configuration « fermé » ;
- l'approche du moyen d'identification, depuis l'extérieur du véhicule, à proximité du boîtier de commande, à une distance inférieure à un seuil limite prédéfini ;
- la lecture de la puce de moyen d'identification par l'élément de communication du boîtier de commande et l'activation du moyen d'actionnement ;
- le verrouillage et la condamnation du véhicule avec le boîtier de commande et la clé électronique dans le véhicule, notamment dans l'habitacle du véhicule.

D'autres détails, caractéristiques et avantages ressortiront plus clairement à la lecture de la description détaillée donnée ci-après, à titre indicatif et non limitatif, en relation avec les différents exemples de réalisation illustrés sur la figure suivante :
La figure 1 est une représentation schématique simplifiée d'un véhicule automobile équipé d'un ensemble de verrouillage et déverrouillage.
La figure 2 est une représentation schématique d'un exemple de réalisation de l'ensemble de verrouillage et déverrouillage comprenant un boîtier de commande et un moyen d'identification.
La figure 3 est une représentation en perspective d'un exemple de réalisation du boîtier de commande logeant une clé électronique du véhicule.
La figure 4 est une représentation éclatée du boîtier de commande illustré à la figure 3.
La figure 5 est une représentation partielle du boîtier de commande illustré à la figure 3.
La figure 6 est une représentation schématique en coupe du boîtier de commande et d'un moyen d'actionnement de la clé électronique.
La figure 7 est une représentation schématique en coupe illustrant le fonctionnement d'un exemple de réalisation du moyen d'actionnement.
La figure 8 est une représentation simplifié d'un premier exemple de réalisation d'un moyen d'attache du boîtier de commande.
La figure 9 est une représentation simplifié d'un deuxième exemple de réalisation d'un moyen d'attache du boîtier de commande et d'un exemple alternatif d'élément de communication.
La figure 10 est une représentation simplifié d'exemples d'emplacements destinés à recevoir le boîtier de commande.
La figure 11 est une représentation d'un emplacement situé sous une tablette arrière du véhicule.
La figure 12 est une représentation schématique du positionnement d'un emplacement situé dans un hayon du véhicule.
La figure 13 est une représentation schématique d'un emplacement situé dans le hayon du véhicule.

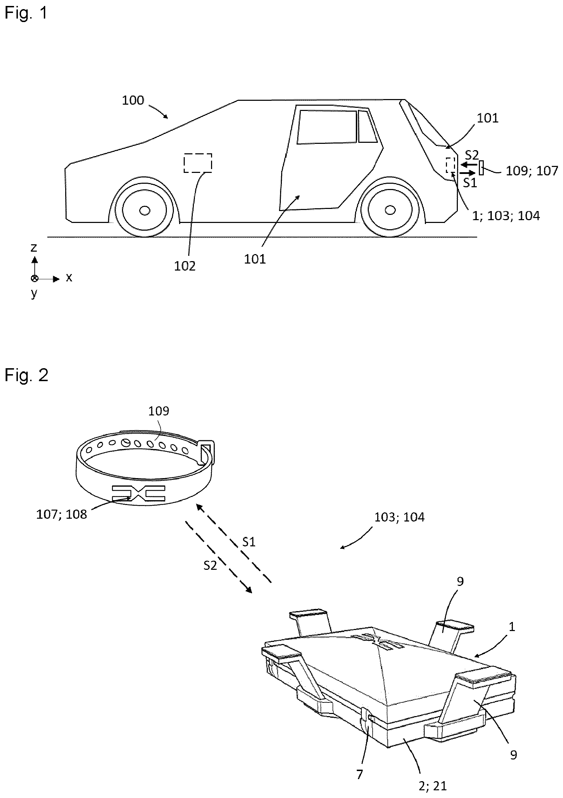

La figure 1 illustre schématiquement un exemple de réalisation d'un véhicule automobile équipé d'un mode de réalisation d'un ensemble de verrouillage et déverrouillage 103. Le véhicule automobile 100 peut être un véhicule de tout type, par exemple un véhicule particulier, de tourisme, utilitaire ou encore un véhicule de transports en commun. Par convention dans la description ci-après, les termes « premier », « deuxième » sont utilisés afin de distinguer des éléments similaires et non afin de définir une hiérarchie au sein desdits éléments.

Le véhicule automobile 100 comprend une pluralité d'ouvrants 101 sélectionnés parmi une ou plusieurs porte(s) latérales et/ou une porte de coffre, aussi qualifiée de hayon et/ou un capot avant. Le véhicule automobile 100 comprend, en outre, un système de gestion centralisée 102 de la pluralité d'ouvrants 1. On entend par « système de gestion centralisée » un système comprit dans l'électronique embarquée du véhicule automobile 100 apte à gérer le verrouillage et le déverrouillage de l'un des ouvrants ou de tout ou partie de la pluralité d'ouvrants simultanément. Notamment, le système de gestion centralisée 102 comprend au moins une antenne disposée dans le véhicule automobile 100, par exemple au niveau d'au moins l'un des ouvrants précités. L'antenne peut être une antenne radioélectrique réceptrice configurée pour capter un signal électromagnétique. Particulièrement, le système de gestion centralisé peut comprendre autant desdites antennes que d'ouvrants.

L'ensemble de verrouillage et déverrouillage 103 selon l'invention comprend un dispositif de verrouillage et déverrouillage 104 et une clé électronique 105.

On entend par « clé électronique » tout type de badge ou clé connu de l'Homme du métier apte à mettre en œuvre le verrouillage et/ou déverrouillage à distance d'au moins l'un des ouvrants du véhicule. Par exemple, la clé électronique 105 comprend un moyen de communication configuré pour communiquer avec le système de gestion centralisée 102 équipant le véhicule. Le système de gestion centralisée 102 est, selon un exemple non limitatif, apte à émettre un signal électromagnétique, notamment émis à une fréquence donnée, pouvant être capté par le moyen de communication de la clé électronique 105 et inversement. Notamment, les antennes du système gestion centralisée peuvent être configurées pour détecter différentes fréquences, correspondant respectivement à différents types de commandes issues de la clé électronique 105.

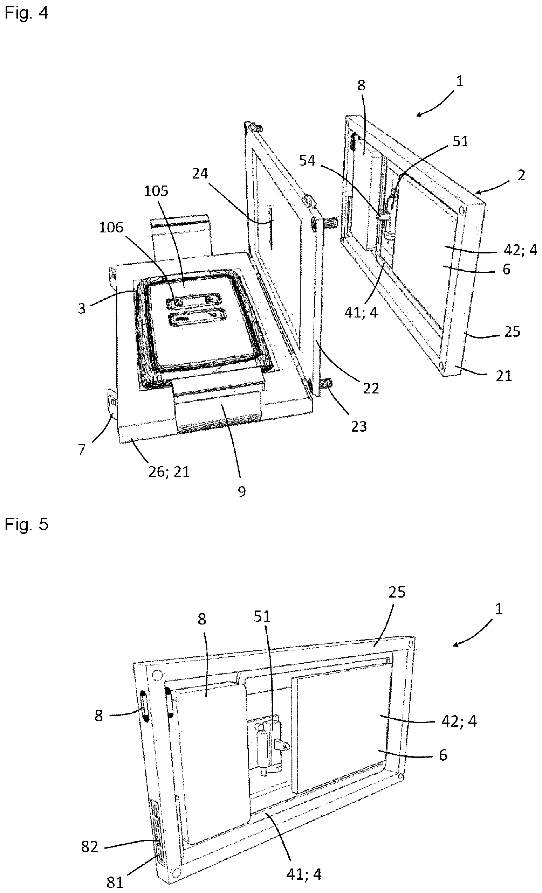

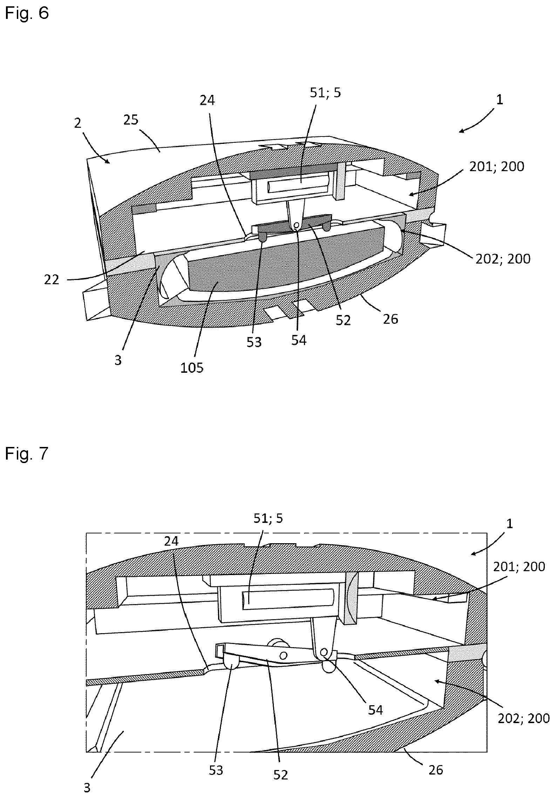

Les figures 2 à 9 illustrent un exemple de réalisation d'une clé électronique 105. La clé électronique 105 comprend une pluralité de boutons 106, ou tout autre organe d'actionnement, permettant de déclencher une fonction ou un ordre défini. Par exemple, la clé électronique 105 comprend un bouton de verrouillage de l'ensemble de la pluralité d'ouvrants et un bouton de déverrouillage de l'ensemble de la pluralité d'ouvrants, dits « centralisés ». La clé électronique 105 peut également comprendre un bouton de déverrouillage du hayon permettant de déverrouiller le hayon indépendamment des autres ouvrants du véhicule ou encore un bouton de déverrouillage du capot. La clé électronique 105 peut ainsi avantageusement être configurée de sorte que chaque bouton permet d'émettre, via le moyen de communication, un signal à une fréquence spécifique, de sorte que des fréquences distinctes sont associées à une fonction, c'est-à-dire à un ordre, distincte propre à l'un des boutons 106.

Ainsi, le système de gestion centralisée 102, via les antennes détecte le type d'ordre émis en reconnaissant la fréquence du signal électromagnétique.

De manière générale, le dispositif de verrouillage et déverrouillage 104 selon l'invention comprend au moins un moyen d'identification 107 portable, destiné à être porté par un utilisateur, et un boîtier de commande 1 destiné à être disposé sur ou dans le véhicule. Tel que davantage exposé ci-après, le moyen d'identification 107 est apte à communiquer à distance avec le boîtier de commande 1 tandis que le boîtier de commande 1 est apte à loger la clé électronique 105 et apte à déclencher mécaniquement au moins une fonction, ou un ordre, de ladite clé électronique 105, notamment une fonction de verrouillage centralisé, de déverrouillage centralisé et/ou d'ouverture d'un coffre du véhicule, par interaction avec au moins l'un des boutons 106 de la clé électronique 105 lorsque que le moyen d'identification 107 est détecté.

Le moyen d'identification 107 portable comprend notamment une puce 108, aussi connue sous le nom d'étiquette de l'anglais « tag », apte à communiquer avec le boîtier de commande 1. Il peut être avantageusement équipé dans un accessoire 109 tel que, de manière non limitative, un bracelet, une montre, une bague, un collier ou un porte-clés. Un tel accessoire 109 peut notamment permettre une activation à distance dite « mains libres ». Particulièrement, le moyen d'identification 107 peut être compris dans un accessoire 109 étanche. Egalement, l'accessoire 109 peut être fabriqué de sorte à présenter une structure robuste, adaptée aux conditions extérieures difficiles susceptibles d'être rencontrées par l'utilisateur, par exemple des chocs répétés, de l'humidité ou la présence de poussières et particules. La communication entre l'accessoire 109 et le boîtier de commande 1 renfermant la clé électronique 105, davantage détaillée ci-après, permet une validation de l'identité de l'usager, laquelle permet d'initier un ordre de verrouillage ou déverrouillage des ouvrants exécuté par le boîtier de commande 1 par simple présentation de l'accessoire 109.

Dans l'exemple de réalisation illustré, le moyen d'identification 107 comprend une puce RFID 108, reposant sur la technologie RFID, de l'acronyme anglais « Radio Frequency Identification ». Particulièrement, la puce RFID 108 peut être passive. Un tel moyen d'identification 107 permet avantageusement d'éliminer la nécessité d'une source d'énergie au sein de l'accessoire 109 et d'écarter la problématique de l'autonomie d'un tel accessoire 109. L'accessoire 109 n'a ainsi aucune source d'énergie, le rendant de ce fait adapté à une utilisation dans des conditions extérieures difficiles propres à la pratique de sports en environnement extérieur. Il est néanmoins entendu que l'invention peut s'étendre, *mutatis mutandis,* à tout autre type de puce électronique connue apte à communiquer avec le boîtier de commande 1, par exemple par l'intermédiaire des technologies « Bluetooth », « Wifi », « NFC », ondes fréquences ou autre, celle-ci pouvant être combinée ou non avec une source d'énergie équipée dans le moyen d'identification 107 selon le besoin.

Selon un exemple particulier de réalisation, le dispositif de verrouillage et déverrouillage 104 peut comprendre une pluralité de moyen d'identification 107 distincts, chacun configuré pour communiquer avec au moins un boîtier de commande 1, de sorte à rendre le dispositif et l'ensemble de verrouillage et déverrouillage 103 selon l'invention adapté à une pluralité d'utilisateurs ou à une utilisation familiale.

Le boîtier de commande 1 selon l'invention est un moyen de stockage configuré pour loger la clé électronique 105 et communiquer d'une part directement avec le moyen d'identification 107 et, d'autre part, indirectement avec le système de gestion centralisée 102 du véhicule par l'intermédiaire de la clé électronique. Le boîtier de commande 1 communique avec l'accessoire 109 porté par l'utilisateur et, lorsque celui-ci est détecté, le boîtier de commande 1 est apte à exercer une action mécanique reproduisant la pression exercée par un utilisateur sur l'un des boutons 106 de la clé électronique 105 en vue de déclencher une fonction de celle-ci. Ainsi, le boîtier de commande 1 contenant la clé électronique 105 peut être rangé sur ou dans le véhicule automobile 100 et l'approche du moyen d'identification 107 permet d'activer le boîtier de commande 1 sans que l'utilisateur n'ait besoin d'interagir directement avec ladite clé. Un tel principe permet à un utilisateur de déposer la clé électronique 105 dans le véhicule et non d'avoir l'obligation de la transporter avec lui. De la sorte, la clé électronique 105 n'est pas susceptible d'être endommagée lorsque l'utilisateur est soumis à des conditions extérieures difficiles, comme cela peut être le cas dans la pratique de certains sports. Il n'est pas nécessaire d'altérer la structure de la clé électronique 105, puisque le boîtier de commande 1 a fonction d'intermédiaire, rendant de ce fait la présente invention adaptée à tout type de clé électronique 105. Egalement, le boîtier selon l'invention n'interagit pas directement avec les systèmes embarqués du véhicule, notamment le système de gestion centralisée 102, de sorte que l'électronique embarquée du véhicule n'est pas impactée et ne requiert pas de modification.

A cette fin, le boîtier de commande 1 comprend, de manière générale, un boîtier ouvrable 2 comportant un renfoncement 3 configuré pour loger la clé électronique 105. Le boîtier de commande 1 comprend également un élément de communication 4, un moyen d'actionnement 5 mécanique et un circuit électrique et électronique de commande 6 dudit moyen d'actionnement 5. De la sorte, le boîtier de commande 1 est apte à déclencher au moins une fonction de la clé électronique 105 disposée dans le renfoncement 3, notamment une fonction de verrouillage centralisé, de déverrouillage centralisé et/ou d'ouverture du hayon, lorsque que le moyen d'identification 107 portable est détectée.

Le boîtier ouvrable 2 comprend une pluralité de parois périphériques 21 délimitant un volume interne 200 dans lequel s'étendent au moins le renfoncement 3, et par extension la clé électronique 105 lorsque celle-ci est disposée dans le boîtier de commande 1, au moins une partie de l'élément de communication 4, le moyen d'actionnement 5 mécanique et le circuit électrique et électronique de commande 6. Le boîtier peut également comprendre une paroi intermédiaire 22, délimitant deux compartiments distincts, un premier compartiment 201 comprenant au moins une partie de l'élément de communication 4, le moyen d'actionnement 5 mécanique et le circuit électrique et électronique de commande 6 et un deuxième compartiment 202 comprenant le renfoncement 3. Selon des exemples de réalisation, la paroi intermédiaire 22 peut être montée sur au moins une partie des parois périphériques 21 par l'intermédiaire d'un ou plusieurs moyen(s) de fixation 23 tel qu'une vis, un aimant, des organes de fixation complémentaires, une agrafe ou un clip.

Le renfoncement 3 présente une forme au moins en partie complémentaire de la forme de la clé électronique 105. Optionnellement, le boîtier de commande 1 peut comprendre un organe de positionnement et/ou d'ajustement de la position de la clé dans le renfoncement, non représenté, visant à maintenir la clé électronique 105 immobile et dans une position adaptée au sein du renfoncement 3.

L'élément de communication 4 comprend au moins une antenne et un lecteur compatible avec le moyen d'identification 107. De manière préférentielle, l'élément de communication 4 comprend une antenne RFID 41 et un lecteur RFID 42, coopérant l'un avec l'autre. Lorsque la puce RFID 108 du moyen d'identification 107 est approchée de l'antenne RFID 41 de l'élément de communication 4, le lecteur RFID 42 émet un premier signal électromagnétique S1 vers la puce RFID 108 du moyen d'identification 107. Sous l'action du premier signal électromagnétique S1, la puce RFID 108 génère automatiquement un deuxième signal S2 contenant l'identifiant associé à la puce, notamment ici la puce RFID 108. Ce deuxième signal est capté par le lecteur RFID 42 par l'intermédiaire de l'antenne RFID 41 et traité. L'identifiant contenu dans le signal S2 généré par la puce RFID 108 permet au boîtier de commande 1 de valider le moyen d'identification 107 et ainsi d'assurer que l'usager est autorisé à verrouiller et déverrouiller le véhicule automobile 100. Avantageusement, lorsque la puce RFID 108 est une puce passive, celle-ci est alimentée par le lecteur RFID 42 au moment de l'utilisation grâce à un transfert d'énergie par électromagnétisme. Il est entendu qu'un tel principe s'applique *mutatis mutandis* à tout autre type d'élément de communication 4 adapté, notamment tout type d'élément de communication 4 comprenant une antenne et un lecteur, par exemple tout type d'élément de communication apte à mettre en œuvre une communication par l'intermédiaire des technologies « Bluetooth », « Wifi », « NFC », ondes fréquences ou autre.

De manière connue, le lecteur RFID 42 peut émettre un signal à des fréquences définies selon le niveau de proximité de détection de la puce RFID 108 à mettre en œuvre pour et le niveau de sécurité désiré. Plus la fréquence sélectionnée est élevée, plus une distance de détection d1 de la puce RFID 108 relativement à l'antenne RFID 41 est réduite. En l'espèce, de manière préférentielle, le lecteur RFID 42 peut être configuré pour émettre un signal à hautes fréquences, c'est-à-dire notamment à une fréquence de 13,56MHz afin d'assurer un niveau de sécurité élevé. A une telle fréquence, la distance de détection d1 est réduite, notamment est inférieure ou égale à 100mm.

Alternativement, la communication entre le boîtier de commande 1 et le moyen d'identification 107, réalisée par l'intermédiaire de l'élément de communication 4 et de la puce 108, pourra être mise en œuvre par l'intermédiaire de tout type de communication sans fil adapté, par exemple par « NFC », pour « Near-fiel Communication », « Wifi » ou « Bluetooth » notamment lorsque le moyen d'identification 107 n'est pas destiné à un usage dans des conditions extérieures difficiles et peut, si nécessaire, comprendre une source d'énergie.

Lorsque le moyen d'identification 107 est détecté à proximité, le lecteur RFID 42 est apte à déclencher, par l'intermédiaire du circuit électrique et électronique de commande 6, le moyen d'actionnement 5. Le moyen d'actionnement 5 peut être de tout type et vise à reproduire mécaniquement sans contact direct de l'utilisateur avec la clé électronique 105 logée dans le boîtier, une action de pression de l'utilisateur sur au moins l'un des boutons 106 de la clé électronique 105. L'interaction mécanique entre le boîtier de commande 1 et la clé électronique 105 permet avantageusement de rendre le boîtier adapté à une variété de types de clés électroniques 105, sous réserve de la forme du renfoncement 3 et/ou de la position du moyen d'actionnement 5, sans qu'il soit nécessaire de modifier la clé électronique 105 elle-même et/ou la programmation du système de gestion centralisé. En ce sens, l'invention permet une mise en œuvre plus simple sur une large gamme de véhicules.

Selon un exemple de réalisation non limitatif, le moyen d'actionnement 5 mécanique peut comprendre, tel qu'illustré, au moins un actionneur linéaire 51 et un basculeur 52 comportant une pluralité de doigts 53 d'indexage. Les différents doigts 53 sont agencés de sorte à s'étendre en regard d'au moins l'un des boutons 106 de la clé électronique 105 lorsque celle-ci est disposée dans le boîtier. L'actionneur linéaire 51 et le basculeur 52 sont avantageusement réglables, le déplacement linéaire d'un curseur 54 de l'actionneur linéaire 51 le long du basculeur 52, permet le basculement de l'un des doigts 53, un tel basculement pouvant être adapté pour permettre un rattrapage de jeux ou un ajustement de la pression désirée par exemple. Le basculeur 52 est articulé suivant un axe pivot référencé avec le curseur 54 lorsque le moyen d'actionnement 5 est dans une position nominale, aussi qualifiée « de repos ». Dans une telle position nominale, le curseur 54 présente une position centrale et les différents doigts 53 s'étendent à distance non nulle de la clé électronique 105. Les doigts 53 d'indexage s'étendent au travers d'un orifice 24 compris dans la paroi intermédiaire 22. Lorsque le moyen d'actionnement 5 est activé, le curseur 54 de l'actionneur linéaire 51 est déplacé selon un mouvement linéaire le long du basculeur 52 en direction de l'un des doigts 53. Ledit doigt 53 est alors déplacé depuis la position nominale vers une position « d'activation » dans laquelle il effectue un effort sur l'un des boutons 106 de la clé électronique 105 suffisant pour déclencher l'ordre associé audit bouton. Autrement dit, ledit doigt 53 est déplacé vers le deuxième compartiment 202 et vers le renfoncement 3. Le basculeur 52 est alors basculé de sorte que l'autre doigt s'étend toujours à distance de la clé électronique 105.

En l'espèce, les deux doigts 53 d'indexage s'étendent en regard du bouton 106 de verrouillage centralisé et du bouton de déverrouillage centralisé. D'autres combinaisons d'ordres pourront néanmoins être envisagées.

Selon un exemple alternatif, non représenté, le moyen d'actionnement 5 peut comprendre une pluralité de doigts 53 d'indexage actionnables indépendamment les uns des autres, chacun relié à un électroaimant.

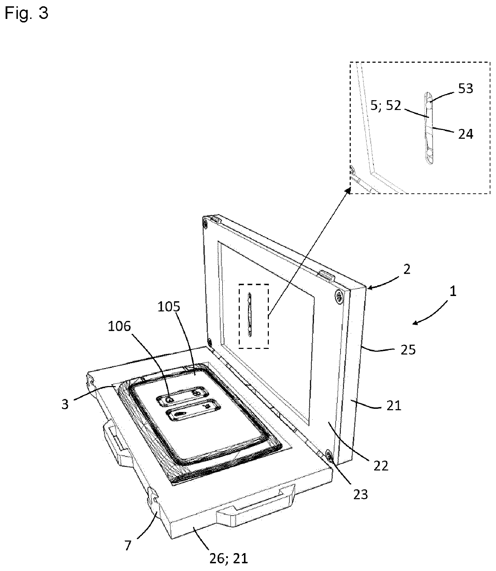

Les figures 3 à 7 illustre un exemple particulier de réalisation du boîtier de commande 1 tel qu'exposé plus haut. Dans un tel exemple de réalisation, le boîtier ouvrable 2 comprend un premier demi boîtier 25 et un deuxième demi boîtier 26 montés mobiles l'un relativement à l'autre. Le premier demi boîtier 25 comprend le premier compartiment 201 ainsi qu'au moins une partie de l'élément de communication 4, le moyen d'actionnement 5 mécanique et le circuit électrique et électronique de commande 6 tel qu'exposé précédemment. Le deuxième demi boîtier 26 comprend le deuxième compartiment 202 et notamment le renfoncement 3 configuré pour recevoir la clé électronique 105. Dans l'exemple illustré, les demi-boîtiers 25, 26 sont assemblés pour former le boîtier ouvrable 2, lequel s'inscrit dans une forme parallélépipédique non limitative. Egalement, de manière non limitative, la paroi intermédiaire 22 est montée dans le premier demi boîtier 25 de sorte à fermer le premier compartiment 201 tandis que le deuxième compartiment 202 reste ouvert. Les dimensions et formes des demi-boîtiers pourront notamment être modifiées en fonction de la clé électronique 105 à loger, du circuit électrique et électronique de commande 6 et/ou du type de l'élément de communication 4.

Les premier demi boîtier 25 et deuxième demi boîtier 26 peuvent être montés mobiles l'un relativement à l'autre selon différentes alternatives. Par exemple, tel qu'illustré, lesdits demi-boîtiers peuvent être montés pivotants l'un relativement à l'autre par l'intermédiaire d'une ou plusieurs charnières. Selon un autre exemple, les demi-boîtiers peuvent être montés coulissants l'un relativement à l'autre par l'intermédiaire d'un rail ou d'un élément de guidage. Selon encore une autre option, les demi-boîtiers peuvent être détachables et rapportés l'un relativement à l'autre de sorte qu'ils peuvent être séparé par intervention de l'utilisateur.

Le boîtier de commande 1 comprend également au moins un organe de fermeture 7 du boîtier ouvrable 2 configuré pour maintenir ledit boîtier en configuration « fermée ». On entend par configuration « fermée » une configuration dans laquelle le boîtier ouvrable 2 est clos et le renfoncement 3, avec ou sans la clé électronique 105, est inaccessible à un utilisateur. A l'inverse, on entend par une configuration « ouverte » une configuration dans laquelle le renfoncement 3 est accessible, afin de déposer ou prendre ladite clé électronique 105. A titre d'exemple non limitatif, l'au moins un organe de fermeture 7 peut être un aimant, des organes de fixation complémentaires, une agrafe ou un clip. En l'espèce, le boîtier ouvrable 2 comprend une pluralité d'organes de fermeture 7 répartis le long des parois périphériques 21.

De manière optionnelle, le boîtier de commande 1 peut avantageusement comprendre un moyen d'alimentation 8 en énergie électrique. Le moyen d'alimentation 8 peut être sélectionné parmi une batterie portable, au moins une pile et/ou un port connecteur de charge configuré pour être connecté à une source d'alimentation électrique du véhicule. Par exemple, une batterie portable et/ou une pile peut être disposée dans le premier compartiment 201. Un ou plusieurs ports connecteurs peuvent être disposés dans les parois périphériques 21 du boîtier ouvrable 2.

Egalement, de manière avantageuse, le boîtier de commande 1 peut comprendre un mécanisme d'interruption 81 de l'alimentation du boîtier de commande 1, tel qu'un interrupteur ou bouton On/Off, et/ou un indicateur 82 de niveau d'énergie de l'au moins un moyen d'alimentation 8. La présence d'un mécanisme d'interruption 81 et/ou d'un indicateur 82 du niveau d'énergie vise à assurer l'autonomie du boîtier de commande 1. Notamment, il est préférable de ne pas maintenir les différents composants du boîtier de commande 1, notamment l'élément de communication 4, actif pendant plusieurs heures en l'absence de l'utilisateur au risque que celui-ci n'ait plus l'énergie nécessaire pour fonctionner au retour de l'utilisateur. En effet, lorsque l'usager utilise le dispositif de verrouillage et déverrouillage 104 selon l'invention pour verrouiller son véhicule puis s'absente pendant un intervalle de temps donné, le boîtier de commande 1 reste en attente de déverrouillage. Cela signifie que, durant cet intervalle de temps, l'élément de communication 4 reste actif pour pouvoir détecter un moyen d'identification 107 qui lui serait présenté par l'utilisateur.

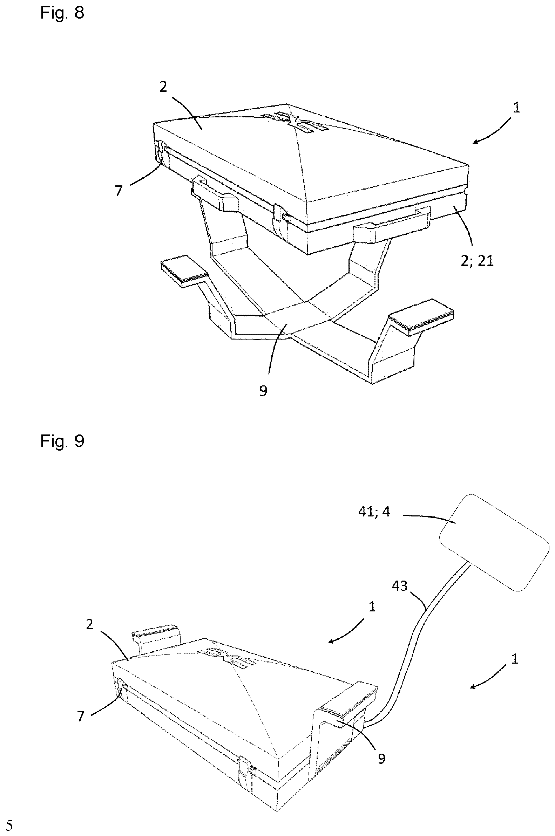

Tel qu'illustré dans les différentes figures, le positionnement de l'antenne 41 de l'élément de communication 4, ici l'antenne RFID 41, peut varier. Selon un exemple de réalisation, illustré aux figures 3 à 7, l'antenne RFID 41 est logée dans le boîtier ouvrable 2, notamment dans le premier compartiment 201, tel qu'exposé précédemment. Selon un autre exemple de réalisation, non représentée, l'antenne RFID 41 peut être fixée à l'extérieur du boîtier ouvrable 2, notamment sur l'une des parois dudit boîtier. Selon encore une autre alternative, illustrée à la figure 9, l'antenne RFID 41 s'étend à l'extérieur du boîtier et est reliée au lecteur RFID 42 par l'intermédiaire d'un câble 43. Par exemple, l'antenne RFID 41 peut comprendre un élément de fixation, tel qu'un organe adhésif, une sangle, un clip ou une ventouse. Une telle antenne, décalée relativement au boîtier ouvrable 2, permet de réduire les contraintes de positionnement du boîtier de commande 1 au sein du véhicule, tel que davantage exposé ci-après. De manière préférentielle, le câble 43 présente une longueur strictement inférieure à 30cm, voire 20cm, voire 15cm.

De manière optionnelle mais préférentielle, le boîtier de commande 1 peut, en outre, comprendre au moins un moyen d'attache 9 du boîtier de commande 1 dans le véhicule, notamment au niveau d'un emplacement prédéfini. Le moyen d'attache 9 peut être un moyen d'attache 9 amovible, tel qu'une sangle, illustrée à la figure 2 ou 8, une bande adhésive ou une ventouse coopérant avec une encoche ou une fente disposée dans le boîtier ouvrable 2. Additionnellement ou alternativement, le moyen d'attache 9 peut être compris dans le boîtier ouvrable 2, tel qu'une patte, comme illustré à la figure 9. Notamment, un tel moyen d'attache 9 peut être venu de matière avec au moins l'une des parois du boîtier ouvrable 2. Le moyen d'attache 9 permet de fixer le boîtier de commande 1 au niveau d'un emplacement 10 situé dans le véhicule, tel qu'une tablette arrière du coffre.

Il est entendu que les différentes alternatives exposées ci-dessus, relatives aux moyens d'attache 9 et à l'élément de communication 4, notamment au type de communication et à l'emplacement de l'antenne, peuvent être combinés au-delà des exemples décrits et illustrés, non limitatifs.

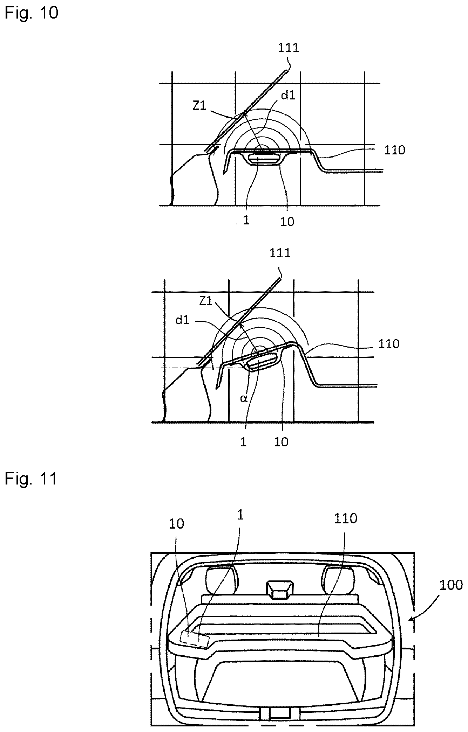

Tel que représenté aux figures 10 à 13, le véhicule automobile 100 peut comprend un emplacement 10 prédéfini destiné à recevoir le boîtier de commande 1 contenant la clé électronique 105, notamment un emplacement 10, ou zone de dépose, situé dans l'habitacle du véhicule. En fonction de la technologie de communication mise en œuvre, l'emplacement 10 peut être soumis à des contraintes particulières. Par exemple, dans le cas de la technologie RFID, l'emplacement 10 est soumis à des contraintes de proximité. Par exemple, le boîtier de commande 1 doit être situé à une distance de détection d1 strictement inférieure à 100mm, voire à 80 mm ou encore 50mm, relativement à une zone de détection Z1 du moyen d'identification 107, une telle distance étant d'autant plus réduite que la fréquence sélectionnée du signal est élevée. Egalement, cette technologie reposant sur la transmission d'ondes électromagnétique, le boîtier de commande 1, notamment au moins l'antenne RFID 41, doit s'étendre au moins en partie en regard d'une zone de détection Z1 du moyen d'identification 107 dépourvue de surfaces métalliques du fait des champs électromagnétiques, ou CEM. Particulièrement, pour faciliter le passage du signal, l'emplacement 10 du boîtier de commande 1 peut être situé à proximité d'un vitrage 111 du véhicule automobile, par exemple à proximité d'un vitrage du hayon, du pare-brise ou de l'une des portes latérales. On entend ici par « à proximité » à une distance de détection d1 telle que définie plus haut.

Selon différents exemples, le véhicule peut comprendre un ou plusieurs emplacement(s) 10 prédéfinis, sélectionné(s) parmi :
- un emplacement 10 situé en regard d'un vitrage 111 du véhicule automobile le long d'au moins une direction, notamment en regard du hayon, du pare-brise, de l'une des vitres latérales et/ou d'une custode avant ou arrière ; et/ou
- un emplacement 10 situé sur ou sous la tablette arrière du véhicule automobile ou dans une zone d'un habillage du hayon du véhicule automobile ; et/ou
- un emplacement 10 situé dans une planche de bord avant du véhicule automobile ; et/ou
- un emplacement 10 situé dans une trappe de carburant ou de recharge du véhicule comprenant une surface en matériau plastique ; et/ou
- un emplacement 10 situé dans un passage de roue du véhicule ; et/ou
- un emplacement 10 situé au niveau du logo avant ou arrière du véhicule ; et/ou
- un emplacement 10 situé dans la partie haute d'un pied disposé entre des ouvrants ou d'un pied bordant un pare-brise, notamment au niveau d'un habillage, par exemple un habillage extérieur ; et/ou
- un emplacement 10 situé dans le capot, notamment au niveau d'une zone de dépose intérieure.

Les figures 10 et 11 illustrent notamment des exemples de réalisation d'un emplacement 10 situé sous la tablette 110 arrière du véhicule, dans une zone proche du vitrage 111 du hayon. Les tablettes 110 arrières comprennent classiquement des matériaux adaptés à l'utilisation de la présente invention, tel que de la feutrine et/ou du plastique. Un tel emplacement 10 permet avantageusement de cacher le boîtier de commande 1 de la vue d'un passant extérieur et est facilement accessible pour l'utilisateur. Egalement, les moyens d'attache 9, par exemple des sangles ou des bandes adhésives, permettent une fixation simple du boîtier de commande 1 sur la tablette 110 arrière.

Selon un exemple particulier de réalisation, afin de réduire la distance de détection d1 entre l'emplacement 10 situé au niveau de la tablette 110 et la zone de détection Z1 au niveau de laquelle le moyen d'identification 107 doit être présenté depuis l'extérieur du véhicule par l'utilisateur, la forme de la tablette 110 arrière peut être avantageusement adaptée. Par exemple, tel qu'illustré à la figure 10, une inclinaison α d'une portion de la tablette 110 arrière comprenant l'emplacement 10 peut être modifiée en fonction de la distance de détection d1 requise. Notamment, plus la fréquence de transmission du signal mise en œuvre est élevée, plus la distance de détection d1 est réduite. Afin de permettre une telle réduction de la distance de détection d1, la portion inclinée de la tablette 110 arrière peut présenter une inclinaison α plus importante relativement à un plan horizontal parallèle au sol sur lequel s'étend le véhicule, par exemple comprise entre 0 et 80°, voire entre 10 et 60° ou encore entre 15 et 45°. Ainsi, la figure 10 illustre un exemple dans lequel la tablette 110 arrière s'étend sensiblement horizontalement, définissant ainsi une distance de détection d1 de l'ordre de 80mm relativement au vitrage 111, notamment de la zone de détection Z1 comprise dans le vitrage. Dans le deuxième exemple illustré à la figure 10, la tablette 110 arrière comprend une portion inclinée par rapport au plan horizontal et la distance de détection d1 est plus réduite, notamment ici de l'ordre de 50 millimètres relativement au vitrage 111, notamment de la zone de détection Z1 comprise dans le vitrage.

Un principe similaire peut s'appliquer *mutatis mutandis* pour un emplacement 10 situé sur ou sous la planche de bord, la distance de détection d1 pouvant alors être définie relativement au pare-brise.

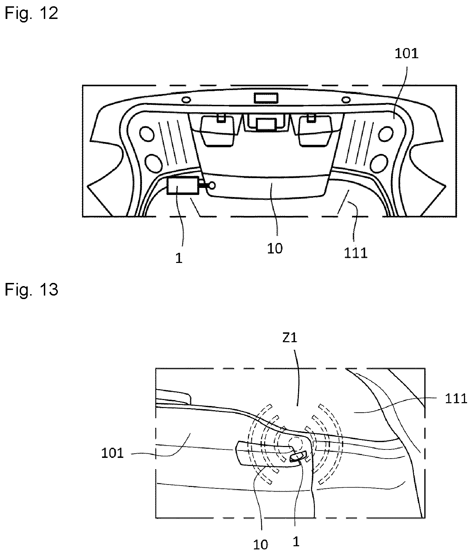

La figure 11 et la figure 12 illustre un exemple de mise en œuvre d'un emplacement 10 arrangé dans une zone d'un habillage du hayon du véhicule automobile 100. Le boîtier de commande 1 peut avantageusement être disposé dans une poche ou un compartiment formant l'emplacement 10, ou encore fixé par l'un des moyens d'attache 9 exposé précédemment sur l'habillage du hayon.

Un principe similaire peut être reproduit avec un compartiment aménagé au niveau d'un logo du véhicule, tel qu'exposé plus haut.

Particulièrement, dans le cas d'un boîtier de commande 1 comprenant une antenne RFID 41 externe, reliée au boîtier ouvrable 2 par l'intermédiaire d'un câble 43, les contraintes de positionnement du boîtier de commande 1 sont réduites. En effet, il n'est alors pas nécessaire de s'assurer qu'aucune surface métallique n'est interposée entre l'emplacement 10 du boîtier de commande 1 et la zone de détection, mais seulement d'assurer que l'antenne RFID 41 est disposée à distance de telles surfaces. Aussi, il est possible de disposer le boîtier ouvrable 2 contenant la clé électronique 105 dans une portière latérale, par exemple dans un compartiment de rangement ou un habillage de porte, tandis que l'antenne RFID 41 peut être fixée sur une surface vitrée de l'ouvrant.

Le boîtier de commande 1 selon l'invention peut ainsi être disposé dans une grande variété d'emplacements 10, l'utilisateur étant ainsi libre de sélectionner l'emplacement 10 le plus adapté à son utilisation. Egalement, le véhicule peut être équipé d'une pluralité de boîtiers de commande, agencés au niveau d'emplacements 10 distincts sélectionnés parmi ceux précités. L'utilisateur peut alors ranger la clé électronique 105 dans le boîtier de commande 1 disposé à l'emplacement 10 présentant le plus d'intérêt en fonction de l'utilisation ou de l'activité prévue.

La présente invention s'étend également à un procédé de verrouillage d'un véhicule comprenant un ensemble de verrouillage et déverrouillage 103 selon l'invention. Un tel procédé est assimilable à un procédé d'utilisation d'un véhicule automobile équipé d'un ensemble de verrouillage et déverrouillage 103 selon l'invention.

Le procédé comprend le portage du moyen d'identification 107 par un utilisateur. Tel qu'exposé précédemment, le moyen d'identification 107 peut être compris dans une large variété d'accessoires 109 que l'utilisateur peut conserver sur lui. Egalement, une pluralité de moyens d'identification peuvent être répartis entre différents utilisateurs, un unique moyen d'identification 107 étant requis pour la mise en œuvre du présent procédé.

L'utilisateur doit procéder à la mise en place de la clé électronique 105 dans le boîtier ouvrable 2 du boîtier de commande 1, puis à la fermeture dudit boîtier. Une telle étape peut être réalisée préalablement, simultanément ou ultérieurement à l'étape de portage. Le boîtier de commande 1 contenant la clé électronique 105 doit ensuite être positionné au niveau de l'un des emplacements 10 prédéfinis situés dans ou sur le véhicule. L'emplacement 10 peut être sélectionné parmi ceux exposé précédemment selon le besoin.

L'utilisateur procède ensuite à la fermeture des ouvrants du véhicule de sorte que l'ensemble des ouvrant est en configuration « fermé ». Les ouvrants sont alors clos mais non verrouillés. L'utilisateur doit ensuite approcher le moyen d'identification 107, depuis l'extérieur du véhicule, à proximité du boîtier de commande 1, au niveau de la zone de détection Z1 située à une distance de détection d1 inférieure à un seuil limite prédéfini. La position de la zone de détection peut notamment être définie selon les différents critères exposés précédemment, à savoir en fonction de la distance de détection d1, selon le type de communication mis en œuvre, selon le mode d'intégration de l'antenne, ici l'antenne RFID 41, mis en œuvre et/ou en fonction de la présence d'une surface métallique. De manière préférentielle, tel que décrit précédemment, la zone de détection Z1 est située au niveau d'une surface vitrée et/ou d'une surface comprenant un matériau plastique ou tout autre matériau non métallique. Egalement, de manière préférentielle, ladite zone de détection Z1 est disposé à une distance de détection d1 inférieure ou égale à un seuil limite de 100mm, voire de 80 mm ou encore de 50mm, relativement à l'antenne RFID 41 du boîtier de commande 1.

La puce RFID 108 du moyen d'identification 107 est ainsi lue par le lecteur RFID 42 du boîtier de commande 1 qui déclenche l'activation du moyen d'actionnement 5. Le moyen d'actionnement 5 procède tel qu'exposé précédemment en reproduisant une action de pression sur l'un des boutons 106 de la clé électronique 105, notamment ici un bouton de verrouillage associé à un ordre de verrouillage centralisé de l'ensemble des ouvrants. Il est entendu qu'un tel principe pourra s'étendre à un ordre de verrouillage du hayon seul.

Le verrouillage et la condamnation du véhicule est ainsi exécuté par l'intermédiaire de l'interaction du boîtier de commande 1 avec la clé électronique 105 rangée dans ledit boîtier. Aucun contact direct entre l'utilisateur et la clé électronique 105 n'est ainsi requis et le boîtier de commande 1 n'affecte aucunement les programmes et systèmes embarqués dans le véhicule, son interaction étant limitée à une interaction physique, mécanique, avec la clé électronique 105 existante.

De manière optionnelle, afin de prolonger l'autonomie du boîtier de commande 1, notamment lorsque celui-ci comprend une batterie ou une pile, le procédé peut comprendre une étape préalable de démarrage, c'est-à-dire d'allumage du boîtier de commande 1, lorsque celui-ci est équipé d'un mécanisme d'interruption 81 de l'alimentation du boîtier de commande 1. Optionnellement également, le procédé peut comprendre une étape préalable de vérification du niveau d'énergie du boîtier de commande 1 lorsque celui-ci est équipé d'un indicateur 82 de niveau d'énergie de l'au moins un moyen d'alimentation 8.

Optionnellement, le boîtier de commande 1 peut être programmé pour déclencher, par l'intermédiaire du circuit électrique et électronique de commande 6 par exemple, un compte à rebours ou minuteur, définissant un délai dans lequel l'action de présentation du moyen d'identification 107 au niveau de la zone de détection et les différentes étapes préalables précitées doivent être exécutées avant annulation de l'exécution du procédé. Par exemple le délai d'exécution desdites étapes peut être fixé à 60s, voire 45s. Un tel principe permet avantageusement un contrôle plus affiné de la consommation d'énergie du lecteur RFID 42 et permet d'assurer que le boîtier de commande 1 dispose de suffisamment d'énergie électrique pour effectuer les actions requises. A noter que, dans une telle situation, la communication existante entre la clé électronique 105 et les antennes équipant le véhicule, comprises dans le système de gestion centralisée 102, restent alimentées, celles-ci étant indépendantes du boîtier de commande 1.

Pour procéder au déverrouillage du véhicule, le principe inverse du procédé exposé précédemment peut être mis en œuvre. L'utilisateur procède, dans un premier temps, à l'approche du moyen d'identification 107 afin de le présenter au niveau de la zone de détection Z1. Le boîtier de commande 1 procède à la lecture de la puce RFID 108 par l'intermédiaire de l'élément de communication 4, notamment du lecteur RFID 42, et déclenche le moyen d'actionnement 5 mécanique. L'un des doigts 53 effectue alors une pression sur le bouton de la clé électronique 105 correspondant au déverrouillage centralisé des ouvrants, ou encore au déverrouillage du hayon ou du capot. Le ou les ouvrant(s) sont ainsi déverrouillés et le véhicule décondamné. L'utilisateur peut alors ouvrir au moins l'un des ouvrants et récupérer le boîtier de commande 1. Il peut ensuite en extraire la clé électronique 105.

Optionnellement, l'utilisateur peut ensuite procéder à l'arrêt du boîtier de commande 1 et/ou à la vérification du niveau d'énergie tel qu'exposé plus haut.

La présente invention propose ainsi un boîtier de commande, un dispositif et un ensemble de verrouillage et déverrouillage d'un véhicule ainsi qu'un procédé de verrouillage dudit véhicule permettant avantageusement de conserver le système de gestion centralisée des ouvrants embarqué dans le véhicule sans intervention sur la programmation ou les éléments matériels et logiciels propres audit système de gestion centralisée. La présente invention est, en outre, avantageusement adaptée à tout type de clé ou badge électronique connu, sans qu'il soit nécessaire d'y apporter de modification. L'invention en est, de ce fait, peu coûteuse. Le boîtier de commande permet également l'exécution d'un ou plusieurs des fonctions, ou ordres, propres à la clé électronique.

L'invention permet à un utilisateur de laisser la clé électronique, susceptible d'être endommagée dans des conditions extérieures difficiles, par exemple en cas de pratique d'un sport extérieur, dans ou sur le véhicule, à un emplacement adapté pour assurer sa sécurité et sa protection. Les fonctions de la clé électronique sont alors exécutées par l'intermédiaire du boîtier de commande lorsqu'un moyen d'identification porté par l'utilisateur est détecté. Le moyen d'identification est avantageusement adapté à de telles conditions et peut être porté à tout moment par l'utilisateur, sans crainte de l'endommager.

La communication réalisée entre le moyen d'identification et le boîtier de commande 1 est adaptée à une utilisation sécurisée de la gestion des ouvrants du véhicule. De plus les emplacements envisagés pour déposer le boîtier de commande dans le véhicule sont protégés des regards extérieurs, l'accès direct à la clé électronique est ainsi rendu difficile pour toute personne non équipée d'un moyen d'identification.

La présente invention ne saurait toutefois se limiter aux moyens et modes décrits et illustrés ici et elle s'étend également à tout moyen ou mode équivalents et à toute combinaison techniquement opérante de tels moyens dans la mesure où ils remplissent *in fine* les fonctionnalités décrites et illustrées dans le présent document.

## Revendications

1. Boîtier de commande (1) pour dispositif de verrouillage et déverrouillage (104) d'un véhicule équipé d'un système de gestion centralisée (102) d'ouvrants comprenant un boîtier ouvrable (2) comportant un renfoncement (3) configuré pour loger une clé électronique (105) du véhicule, le boîtier de commande (1) comprenant un élément de communication (4), un moyen d'actionnement (5) mécanique et un circuit électrique et électronique (6) de commande dudit moyen d'actionnement (5) de sorte que le moyen d'actionnement (5) est apte à déclencher au moins une fonction de la clé électronique (105), notamment une fonction de verrouillage centralisé, de déverrouillage centralisé et/ou d'ouverture d'un coffre du véhicule, lorsque qu'un moyen d'identification (107) portable, équipé d'une puce (108) apte à communiquer avec l'élément de communication (4), est détecté, caractérisé en que le boîtier de commande (1) comprend, en outre, un moyen d'alimentation (8) en énergie électrique sélectionné parmi une batterie portable, au moins une pile et/ou un port connecteur de charge, et en ce que le boîtier de commande (1) comprend un mécanisme d'interruption (81) de l'alimentation du boîtier de commande (1).

2. Boîtier de commande (1) selon la revendication précédente, dans lequel le moyen d'actionnement (5) mécanique comprend :
- au moins un actionneur linéaire (51) et un basculeur (52) comportant une pluralité de doigts (53) d'indexages rotatifs ; et/ou
- une pluralité de doigts (53) d'indexage actionnables indépendamment les uns des autres, chacun relié à un électroaimant.

3. Boîtier de commande (1) selon la revendication 1 ou 2, comprenant un indicateur (82) de niveau d'énergie de l'au moins un moyen d'alimentation (8).

4. Boîtier de commande (1) selon l'une des revendications précédentes, dans lequel l'élément de communication (4) comprend une antenne, notamment une antenne RFID (41), et un lecteur, notamment un lecteur RFID (42), l'élément de communication étant tel que :
- l'antenne (41) est logée dans le boîtier ouvrable (2) ; ou
- l'antenne (41) est fixée sur le boîtier ouvrable (2) ;
- l'antenne (41) s'étend à l'extérieur du boîtier ouvrable (2) et est reliée au lecteur (42) par l'intermédiaire d'un câble (43).

5. Boîtier de commande (1) selon l'une des revendications précédentes, comprenant, en outre, au moins un moyen d'attache (9) du boîtier dans le véhicule sélectionné parmi un moyen d'attache (9) amovible, tel qu'une sangle, une bande adhésive ou une ventouse, et/ou un moyen d'attache (9) compris dans le boîtier ouvrable (2), tel qu'une patte.

6. Dispositif de verrouillage et déverrouillage (104) d'un véhicule automobile comprenant un système de gestion centralisée (102) d'une pluralité d'ouvrants, le dispositif comprenant un boîtier de commande (1) selon l'une des revendications précédentes et au moins un moyen d'identification (107) portable, notamment équipé dans un accessoire (109) tel qu'un bracelet, une montre, une bague, un collier ou un porte-clés, comprenant une puce (108), notamment une puce RFID (108).

7. Ensemble de verrouillage et déverrouillage (103) d'un véhicule automobile comprenant un système de gestion centralisée (102) d'une pluralité d'ouvrants, l'ensemble (103) comprenant un dispositif de verrouillage et déverrouillage (104) selon la revendication précédente et une clé électronique (105), disposée dans le boîtier de commande (1).

8. Véhicule automobile comprenant un dispositif de verrouillage et déverrouillage (104) selon la revendication 6 et/ou un ensemble de verrouillage et déverrouillage (103) selon la revendication 7, le véhicule comprenant, en outre, un système de gestion centralisée (102) et au moins un emplacement (10) défini de positionnement du boîtier de commande (1), l'au moins un emplacement (10) étant sélectionné parmi :
- un emplacement (10) situé en regard d'un vitrage (111) du véhicule automobile le long d'au moins une direction, notamment en regard d'un hayon, d'un pare-brise, d'une vitre latérale et/ou d'une custode avant ou arrière ; et/ou
- un emplacement (10) situé sous une tablette (110) arrière du véhicule automobile, dans une zone d'un habillage du hayon du véhicule automobile ; et/ou
- un emplacement (10) situé dans une planche de bord avant du véhicule automobile ; et/ou
- un emplacement (10) situé dans une trappe de carburant ou de recharge du véhicule comprenant une surface en plastique; et/ou
- un emplacement (10) situé dans un passage de roue du véhicule ; et/ou
- un emplacement (10) situé au niveau du logo avant ou arrière du véhicule ; et/ou
- un emplacement (10) situé dans la partie haute d'un pied disposé entre des ouvrants ou d'un pied bordant un pare-brise ; et/ou
- un emplacement (10) situé dans le capot, notamment au niveau d'une zone de dépose intérieure.

9. Procédé de verrouillage d'un véhicule comprenant un ensemble de verrouillage et déverrouillage (103) selon la revendication 7 comprenant :
- le portage du moyen d'identification (107) par un utilisateur ;
- la mise en place de la clé électronique (105) dans le boitier de commande et la fermeture du boîtier ;
- le positionnement du boîtier de commande (1) au niveau d'un emplacement (10) prédéfini du véhicule ;
- la fermeture des ouvrants du véhicule de sorte que l'ensemble des ouvrant est en configuration « fermé » ;
- l'approche du moyen d'identification (107), depuis l'extérieur du véhicule, à proximité du boîtier de commande (1), à une distance inférieure à un seuil limite prédéfini ;
- la lecture de la puce (108) de moyen d'identification (107) par l'élément de communication (4) du boîtier de commande (1) et l'activation du moyen d'actionnement (5) ;
- le verrouillage et la condamnation du véhicule avec le boîtier de commande (1) et la clé électronique (105) dans le véhicule, notamment dans l'habitacle du véhicule.

## Patentansprüche

1. Steuerkasten (1) für eine Verriegelungs- und Entriegelungsvorrichtung (104) eines Fahrzeugs, das mit einem zentralisierten Verwaltungssystem (102) von Öffnungselementen ausgestattet ist, aufweisend einen öffenbaren Kasten (2), der eine Vertiefung (3) aufweist, die dazu ausgelegt ist, einen elektronischen Schlüssel (105) des Fahrzeugs aufzunehmen, wobei der Steuerkasten (1) ein Kommunikationselement (4), ein mechanisches Betätigungsmittel (5) und eine elektrische und elektronische Schaltung (6) zur Steuerung des Betätigungsmittels (5) umfasst, so dass das Betätigungsmittel (5) in der Lage ist, mindestens eine Funktion des elektronischen Schlüssels (105), insbesondere eine Funktion zur Zentralverriegelung, Zentralentriegelung und/oder Öffnung eines Kofferraums des Fahrzeugs, auszulösen, wenn ein tragbares Identifikationsmittel (107), das mit einem Chip (108) ausgestattet ist, der in der Lage ist, mit dem Kommunikationselement (4) zu kommunizieren, detektiert wird, **dadurch gekennzeichnet, dass** die Steuereinheit (1) ferner ein Mittel (8) zur Versorgung mit elektrischer Energie umfasst, das unter einer tragbaren Batterie, mindestens einer Batterie und/oder einem Ladeverbinderanschluss ausgewählt wird, und dass der Steuerkasten (1) einen Mechanismus (81) zum Unterbrechen der Versorgung des Steuerkastens (1) umfasst.

2. Steuerkasten (1) nach dem vorhergehenden Anspruch, wobei das mechanische Betätigungsmittel (5) umfasst:
- mindestens einen Linearaktuator (51) und einen Kipphebel(52), der eine Vielzahl von Drehindexierungsfingern (53) aufweist; und/oder
- eine Vielzahl von unabhängig voneinander betätigbaren Indexierungsfingern (53), die jeweils mit einem Elektromagneten verbunden sind.

3. Steuerkasten (1) nach Anspruch 1 oder 2, umfassend einen Indikator (82) des Energieniveaus des mindestens einen Versorgungsmittels (8).

4. Steuerkasten (1) nach einem der vorhergehenden Ansprüche, wobei das Kommunikationselement (4) eine Antenne, insbesondere eine RFID-Antenne (41), und ein Lesegerät, insbesondere ein RFID-Lesegerät (42), umfasst, wobei das Kommunikationselement derart ist, dass:
- die Antenne (41) in dem öffenbaren Gehäuse (2) untergebracht ist; oder
- die Antenne (41) am öffenbaren Gehäuse (2) befestigt ist;
- sich die Antenne (41) außerhalb des öffenbaren Gehäuses (2) erstreckt und über ein Kabel (43) mit dem Lesegerät (42) verbunden ist.

5. Steuerkasten (1) nach einem der vorhergehenden Ansprüche, ferner umfassend mindestens ein Mittel (9) zum Befestigen des Kastens an dem Fahrzeug, das unter einem lösbaren Befestigungsmittel (9), wie etwa einem Riemen, Klebeband oder Saugnapf, und/oder einem in dem öffenbaren Kasten (2) umfassten Befestigungsmittel (9), wie etwa eine Lasche, ausgewählt wird.

6. Verriegelungs- und Entriegelungsvorrichtung (104) eines Kraftfahrzeugs, umfassend ein zentralisiertes Verwaltungssystem (102) einer Vielzahl von Öffnungselementen, wobei die Vorrichtung einen Steuerkasten (1) nach einem der vorhergehenden Ansprüche und mindestens ein tragbares Identifikationsmittel (107) umfasst, das insbesondere in einem Accessoire (109), wie etwa einem Armband, einer Uhr, einem Ring, Halsband oder Schlüsselanhänger, eingebaut ist, umfassend einen Chip (108), wie etwa einen RFID-Chip (108).

7. Verriegelungs- und Entriegelungsbaugruppe (103) eines Kraftfahrzeugs, umfassend ein zentralisiertes Verwaltungssystem (102) einer Vielzahl von Öffnungselementen, wobei die Baugruppe (103) eine Verriegelungs- und Entriegelungsvorrichtung (104) nach dem vorhergehenden Anspruch und einen elektronischen Schlüssel (105) umfasst, der in dem Steuerkasten (1) angeordnet ist.

8. Kraftfahrzeug, umfassend eine Verriegelungs- und Entriegelungsvorrichtung (104) nach Anspruch 6 und/oder eine Verriegelungs- und Entriegelungsbaugruppe (103) nach Anspruch 7, wobei das Fahrzeug ferner ein zentralisiertes Verwaltungssystem (102) und mindestens eine definierte Stelle (10) zur Positionierung des Steuerkastens (1) umfasst, wobei die mindestens eine Stelle (10) ausgewählt ist unter:
- einer Stelle (10), die einer Verglasung (111) des Kraftfahrzeugs entlang mindestens einer Richtung gegenüberliegt, insbesondere gegenüber einer Heckklappe, einer Windschutzscheibe, einer Seitenscheibe und/oder einem vorderen oder hinteren Seitenfenster; und/oder
- einer Stelle (10), die sich unter einer Heckablage (110) des Kraftfahrzeugs in einem Bereich einer Heckklappenverkleidung des Kraftfahrzeugs befindet; und/oder
- einer Stelle (10), die sich in einem vorderen Armaturenbrett des Kraftfahrzeugs befindet; und/oder
- einer Stelle (10), die sich in einer Kraftstoff- oder Ladeklappe des Fahrzeugs befindet, die eine Kunststoffoberfläche umfasst; und/oder
- einer Stelle (10), die sich in einem Radkasten des Fahrzeugs befindet; und/oder
- einer Stelle (10), die sich am vorderen oder hinteren Logo des Fahrzeugs befindet; und/oder
- einer Stelle (10), die sich im oberen Teil eines zwischen Öffnungselementen angeordneten Fußes oder eines eine Windschutzscheibe umsäumenden Fußes befindet; und/oder
- einer Stelle (10), die sich in der Motorhaube befindet, insbesondere in Höhe eines Innenausbaubereichs.

9. Verfahren zum Verriegeln eines Fahrzeugs, umfassend eine Verriegelungs- und Entriegelungsbaugruppe (103) nach Anspruch 7, umfassend:
- Tragen des Identifikationsmittels (107) durch einen Benutzer;
- Einlegen des elektronischen Schlüssels (105) in den Kasten und Schließen des Kastens;
- Positionieren des Steuerkastens (1) an einer vordefinierten Stelle (10) des Fahrzeugs;
- Schließen der Öffnungselemente des Fahrzeugs, so dass sich alle Öffnungselemente in der "geschlossenen" Konfiguration befinden;
- Annähern des Identifikationsmittels (107) von außerhalb des Fahrzeugs in die Nähe des Steuerkastens (1) in einen Abstand, der kleiner als ein vordefinierter Grenzschwellenwert ist;
- Auslesen des Chips (108) des Identifikationsmittels (107) durch das Kommunikationselement (4) des Steuerkastens (1) und Aktivieren des Betätigungsmittels (5);
- Verriegeln und Versperren des Fahrzeugs mit dem Steuerkasten (1) und dem elektronischen Schlüssel (105) im Fahrzeug, insbesondere im Fahrgastraum des Fahrzeugs.

## Claims

1. Control housing (1) for a locking and unlocking device (104) of a vehicle equipped with a central management system (102) for opening members comprising an openable housing (2) comprising a recess (3) configured to house an electronic key (105) of the vehicle, the control housing (1) comprising a communication element (4), a mechanical actuation means (5) and an electrical and electronic circuit (6) for controlling said actuation means (5) such that the actuation means (5) is able to trigger at least one function of the electronic key (105), in particular a central locking, central unlocking and/or opening function of a luggage compartment of the vehicle, when a portable identification means (107), equipped with a chip (108) capable of communicating with the communication element (4), is detected, **characterized in that** the control housing (1) further comprises an electrical energy power supply means (8) selected from a portable battery, at least one cell and/or a charging port, and **in that** the control housing (1) comprises a power cutoff mechanism (81) for the power supply of the control housing (1).

2. Control housing (1) according to the preceding claim, wherein the mechanical actuation means (5) comprises:
- at least one linear actuator (51) and one rocker member (52) comprising a plurality of rotary indexing fingers (53); and/or
- a plurality of indexing fingers (53) that can be actuated independently of one another, each connected to an electromagnet.

3. Control housing (1) according to Claim 1 or 2, comprising an energy level indicator (82) of the at least one power supply means (8).

4. Control housing (1) according to one of the preceding claims, wherein the communication element (4) comprises an antenna, in particular an RFID antenna (41), and a reader, in particular an RFID reader (42), the communication element being such that:
- the antenna (41) is housed in the openable housing (2); or
- the antenna (41) is fastened to the openable housing (2);
- the antenna (41) extends outside the openable housing (2) and is connected to the reader (42) by a cable (43).

5. Control housing (1) according to one of the preceding claims, further comprising at least one means (9) for attaching the housing within the vehicle selected from a removable attachment means (9), such as a strap, an adhesive strip or a suction cup, and/or an attachment means (9) included in the openable housing (2), such as a tab.

6. Device (104) for locking and unlocking a motor vehicle comprising a central management system (102) for a plurality of opening members, the device comprising a control housing (1) according to one of the preceding claims and at least one portable identification means (107), in particular built into an accessory (109) such as a bracelet, a watch, a ring, a necklace or a key ring, comprising a chip (108), in particular an RFID chip (108).

7. Locking and unlocking assembly (103) for a motor vehicle comprising a central management system (102) for a plurality of opening members, the assembly (103) comprising a locking and unlocking device (104) according to the preceding claim and an electronic key (105), arranged in the control housing (1).

8. Motor vehicle comprising a locking and unlocking device (104) according to Claim 6 and/or a locking and unlocking assembly (103) according to Claim 7, the vehicle further comprising a central management system (102) and at least one predefined location (10) for positioning the control housing (1), the at least one location (10) being selected from the following:
- a location (10) facing a glazing (111) of the motor vehicle in at least one direction, in particular facing a tailgate, a windscreen, a side window and/or a front or rear quarter window; and/or
- a location (10) under a parcel shelf (110) of the motor vehicle, in a region of the tailgate trim of the motor vehicle; and/or
- a location (10) in a front dashboard of the motor vehicle; and/or
- a location (10) in a fuel filler flap or charging flap of the vehicle and comprising a plastic surface; and/or
- a location (10) in a wheel housing of the vehicle; and/or
- a location (10) in the region of the front or rear logo of the vehicle; and/or
- a location (10) in the upper part of a pillar arranged between opening members or of a pillar bordering a windscreen; and/or
- a location (10) in the bonnet, in particular in an internal placement zone.

9. Method for locking a vehicle comprising a locking and unlocking assembly (103) according to Claim 7, comprising:
- the identification means (107) being carried by a user;
- placing the electronic key (105) in the control housing and closing the housing;
- positioning the control housing (1) in a predefined location (10) of the vehicle;
- closing the opening members of the vehicle so that all the opening members are in the "closed" state;
- bringing the identification means (107), from outside the vehicle, close to the control housing (1), to a distance less than a predefined limit threshold;
- reading the chip (108) of the identification means (107) by the communication element (4) of the control housing (1) and activating the actuation means (5);
- locking and securing the vehicle with the control housing (1) and the electronic key (105) in the vehicle, in particular in the passenger compartment of the vehicle.
